# EUROPEAN PATENT SPECIFICATION

(11) **EP 1 555 141 B1**
(45) Date of publication and mention of the grant of the patent: **19.08.2009**
(21) Application number: 04000862.5
(22) Date of filing: 16.01.2004
(51) Int. Cl.: B44C 1/22, E04F 15/022, B32B 21/04, B32B 38/00

(54) **Panel, a method of fabricating a panel and a machine for fabricating panels**
Panel sowie Verfahren und Vorrichtung zur dessen Herstellung
Panneau et méthode et appareil pour sa fabrication

(43) Date of publication of application: 20.07.2005
(73) Proprietor: BERRY FINANCE NV, 8780 Oostrozebeke (BE)
(72) Inventor: Ljosland, Alf, 4580 Lyngdal (NO); Hindersland, Leif Kare, 4580 Lyngdal (NO)
(74) Representative: Grünecker, Kinkeldey, Stockmair & Schwanhäusser Anwaltssozietät

(56) References cited:
- EP-A- 0 439 009
- AT-B- 387 621
- GB-A- 2 243 805
- US-A- 6 006 486

## Description

The invention relates to a panel, a method of fabricating such panels and a machine for fabricating panels. The panels are preferably floor panels.

Panels comprise a decorative layer which has a decorative pattern in order to give the panel the desired decorative effect. The decorative pattern may eg. resemble a wood structure, stone structure or the like.

Such a decorative layer is usually supported by a support layer. The decorative layer and the support layer may form a decorative laminate such as a high pressure laminate (HPL).

The main body of the panel usually consists of a carrier which gives the stability to the panel.

With such floor panels it is possible to build a continuous surface in order to imitate wood flooring such as parquet flooring.

Some floorings, however, other than parquet have no continuous surface as in the case of a floor composed of floor tiles, stone pieces or wood pieces where the groove between the wood pieces is filled in with a particular material, such as a sealing material. Those kind of floorings can not be satisfactorily imitated with the existing panels.

From GB 2 243 805 A, a panel is known having a decorative layer fixed to a carrier by means of adhesive. This first decorative layer is selectively removed to expose the base. A second material of decorative quality is then provided with high adhesion to the exposed base and to the first decorative layer at least adjacent thereto. The second decorative layer is also selectively removed where it overlays the first material.

From AT 387 621 B, a door panel is known from which parts are removed by a tool penetrate ing the door from the top.

The object of the present invention is therefore to provide improved panels and a method and a machine for fabricating such panels.

This problem is solved by the panel of claim 1, the method for fabricating a panel of claim 14 and a machine for fabricating panels of claim 19. Preferred embodiments are disclosed in the dependent claims.

In the panel the decorative layer is partially not present such that the support layer is visible and hence particular optical effects can be achieved.

It is preferable that the decorative layer is not present because it is removed. It may also not be present because it was not provided in the respective area.

Here it is preferable that the support layer is coloured or dyed such that the number of possible optical effects can be increased.

With the removal of the decorative layer a three dimensional structure is obtained which even more realistically, imitates the abovementioned surfaces.

In order to give the impression of a seam between tiles, or the like, it is preferable to have the decorative layer removed in an area which is in the shape of a strip.

Furthermore it might be advantageous to also partially remove the support layer where the decorative layer is removed in order to ensure complete removal of the decorative layer within the fabrication tolerances.

In the case of the panel comprising an abrasive overlay in order to protect the decorative layer it might be possible to also have the abrasive overlay removed where the decorative layer is removed. The abrasive overlay may, nevertheless, also be present where the decorative layer is removed in order to protect the support layer.

The support layer is preferably a layer comprising kraft paper since it allows for good reproducibility and handling of the material.

In order to fabricate such panels, firstly a sandwich of a decorative layer, a support layer and a carrier is provided and afterwards the decorative layer is partially removed such that the support layer becomes visible. As mentioned above, here the support layer may also be partially removed in order to obtain complete removal of the decorative layer within the fabrication tolerances.

In a preferred embodiment of the method the sandwich is cut into separate panels before or after the decorative layer is removed. Thereby it is possible to obtain more than one panel from the sandwich which means that the sandwich can be prepared at the scales of a few meters x a few meters while the panels may have smaller sizes such as, eg. 10-30 cms x 50-120 cms. The panels may also be square.

In a preferred embodiment the decorative layer is removed by a saw and, in particular, by a circular saw. Such a saw allows for a well-controlled and sharp cut which leads to a favourable optical impression.

In a preferred embodiment of the method the decorative layer is removed in the form of strips where the strips are perpendicular to each other. In this case, it is possible to obtain the optical impression of stone tiles or stone plates that are provided at a certain distance such that a seam is present which is filled with a filler.

The machine for fabricating such panels comprises a support surface which is suitable to support the panel while they are moved in order to remove the decorative layer. The machine further comprises a circular saw which extends beyond the support surface by an amount of not more than 1 mm and preferably not more than 0.5 mm. This means that the cutting depth of the circular saw into the panels is in the range of 0.1 to 1.0 or only to 0.5 mm.

In order to obtain a cut with little fabrication tolerances a counter pressure mechanism is provided in order to press the panel against the support surface close to the circular saw. The counter pressure mechanism therefore is most preferably provided opposite to the circular saw.

Further embodiments of the panel, the fabrication method and the machine are shown in the enclosed Figures. Accordingly it is shown in:
- Fig. 1: a schematic cross-section of a panel,
- Fig. 2: a schematic cross-section of another panel,
- Fig. 3: a schematic cross-section of two joined panels,
- Fig. 4: a more detailed cross-section of a panel,
- Fig. 5: a three dimensional schematic view of a panel,
- Fig. 6: a three dimensional schematic view of a machine,
- Fig. 7: a schematic cross-section of a machine,
- Fig. 8: another schematic cross-section of a machine,
- Fig. 9: a schematic view of another machine.

Herein mainly the case of the decorative layer being removed will be discussed. However the same discussion applies for the case the decorative layer being absent because it was not provided.

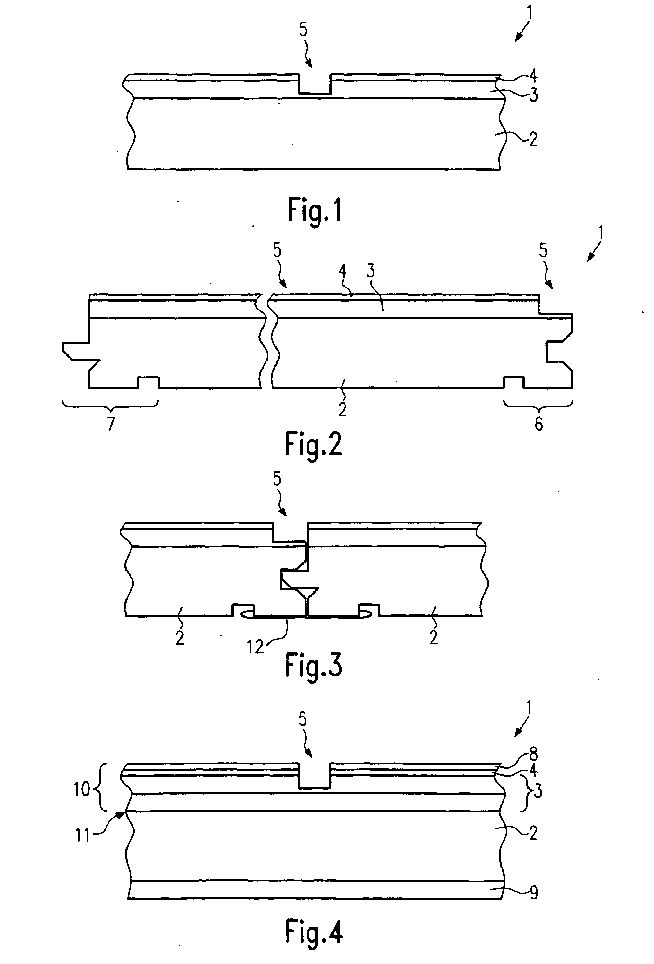

In Fig. 1 a schematic cross-section of a panel 1 is shown. The panel 1 has a carrier which is made of HDF, MDF, cardboard, wood, plastic, metal or the like. On top of the carrier 2 the decorative laminate is provided. The decorative laminate comprises the decorative layer 4 and the support layer 3. The decorative laminate may eg. be a high pressure laminate (HPL).

As can be seen in Fig. 1 in the middle in an area 5 the decorative layer 4 is absent. This may be because the decorative layer was not provided in this area 5 or because it was removed. In the area 5 part of the support layer 3 is removed. Since the decorative layer 4 is absent (not provided or removed) in the area 5, the support layer can be seen in the area 5.

While in Fig. 1 the decorative layer is removed in an area which is not located at the edge of the panel but rather somewhere in the middle, in Fig. 2 the case is shown where the decorative layer 4 is removed in an area 5, which is located at the edge of the panel 1.

As can be seen in Fig. 2, the decorative layer 4 is removed only on the right edge of the panel in the area 5 but is not removed on the opposite edge, namely the left edge in Fig. 2.

In Fig. 2 furthermore connecting portions 6 and 7 are provided which allow for an interconnection between the panels at the respective edges.

As can be seen in Figs. 1 and 2 the cross section of the area 5 where the decorative layer is removed is rectangular. The recess which is formed by the removal of the decorative layer 4 has a rectangular cross-section.

In Fig. 3 it is shown how two panels are joined at their respective edges. The connecting portions 6 and 7 are engaged. An additional clamp 12 may be provided in order to force the two panels towards each other.

Any other engagement mechanism, with or without an additional clamp 12, may be provided in order to join two panels.

As can be seen in Fig. 3, since the area 5 is only part of one of the two panels the seam between the two panels is located in a corner of the recess of the area 5. The seam is therefore almost or, indeed, invisible to the human eye, provided that the fabrication tolerances are sufficiently small.

If on both edges of the panel shown in Fig. 3 the decorative layer 4 is removed then the seam is in the middle of the recess and is more easily visible. This case, however, offers the advantage that the panels may be joined in any orientation.

In Fig. 4 a more detailed schematic cross-section of the panel is shown. Below the carrier 2 an under layer 9 is provided in order to provide for eg. protection of the carrier 2 against abrasion, humidity, or the like. Furthermore a sound absorbing layer 9, or the like, may be provided additionally or as an under layer of the carrier 2.

The support layer 3 is composed of two layers of kraft paper. As shown in Fig. 4, the recess 5 penetrates only into the first kraft paper layer. However, it may also completely penetrate the first kraft paper layer and may further also penetrate into the second kraft paper layer. The recess may also penetrate in some areas into the first kraft paper and in other areas into the second kraft paper (e.g. due to fabrication tolerances an/or in order to achieve special optical affect due to different colours of the two kraft papers.

Further, above the decorative layer 4 an abrasive overlay 8 is provided in order to protect the decorative layer 4 against abrasion.

The composite of the support layer 3, the decorative layer 4 and the abrasive overlay 8 forms the decorative laminate 10. Such a decorative laminate 10 is usually fabricated independently of the carrier and is then glued with glue 11 to the carrier 2.

The decorative layer 4 may be a printed paper which allows for the a great variety of possible optical effects at low cost.

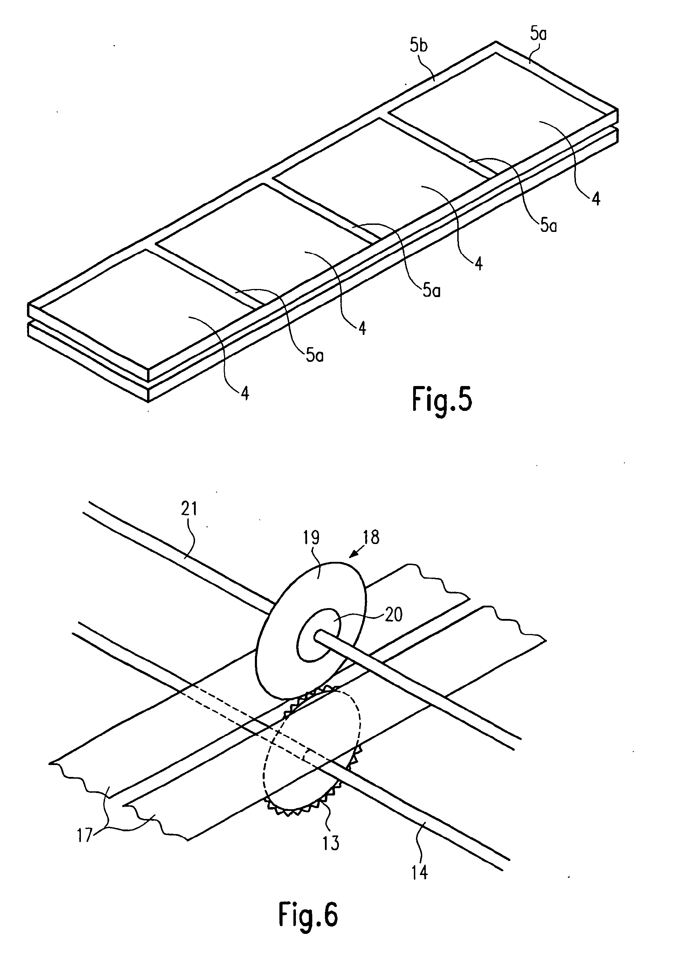

Fig. 5 shows a three-dimensional view of a panel. On the top surface of the panel the decorative layer 4 is absent in the areas 5a and 5b. The area 5b is located along the long edge of the panel. The areas 5a are located in parallel to the short edge. One of the areas 5a is located at the short edge (see Fig. 5, right upper end of the panel).

By providing a plurality of areas 5a it is possible to obtain an effect of square or rectangular tiles, stone plates, wood panels or the like, which are smaller than the panel itself.

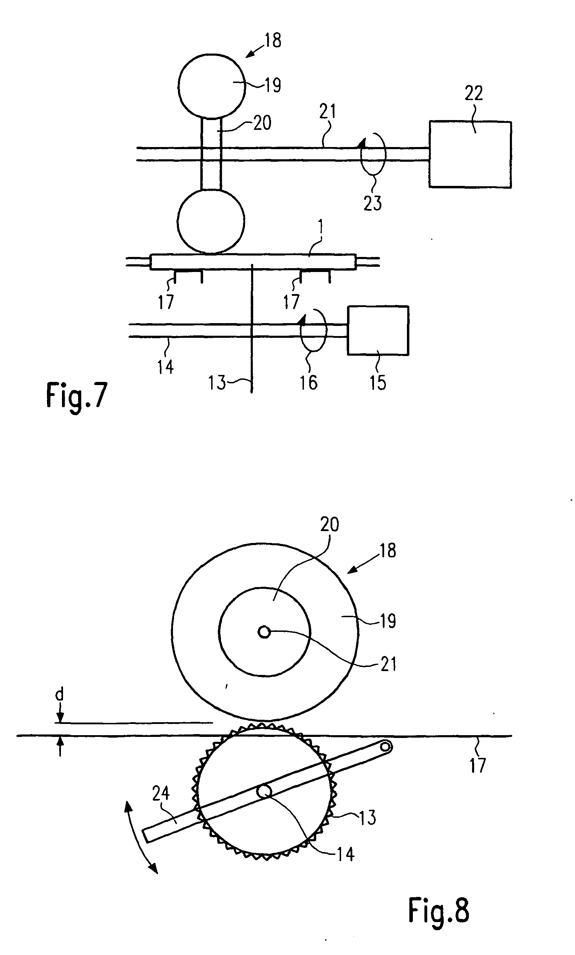

In Fig. 6, 7 and 8 a machine for fabricating panels is shown. The machine comprises a support surface 17 on which panels may be hold and/or moved. Below the support surface 17 the axis 14 of a circular saw with the circular saw blade 13 is provided. The top of the blade 13 extends as little as 1 mm or less as eg. 0.5 mm or even less beyond the upper surface of the support surface 17 (see reference sign d in Fig. 8). Above the support surface 17 a wheel, eg. a rubber wheel 18, is provided. The rubber wheel has a rubber tyre 19 and can be rotated around an axis 21. The wheel 18 allows to exert pressure on a panel which is between the wheel 18 and the supporting surface 17. Thereby it is assured that the panel lies flat on the supporting surface 17 such that the depth of the cut provided by the circular saw blade 13 is uniform along the panel.

While in Fig. 7 the wheel 18 is positioned slightly to the left from the saw blade 13 it may also be positioned directly above or on the right side of the saw blade 13.

The axis 21 may also be connected to a motor 22 which rotates the axis 21 (see reference sign 23). In this way, the wheel 18 is suitable to transport the panel 1 along the supporting surface 17.

As can be seen in Fig. 8, the axis 14 of the circular saw blade 13 may be provided at a lever 24. The lever 24 can be movable such that the blade 13 may be moved downwards. In this position the blade 13 will not cut the panel 1.

In order to finely tune the cut depth of the blade 13 the height of the supporting surface 17 may be provided adjustably. The height 17 may eg. be changed by means of screws, or the like (not shown).

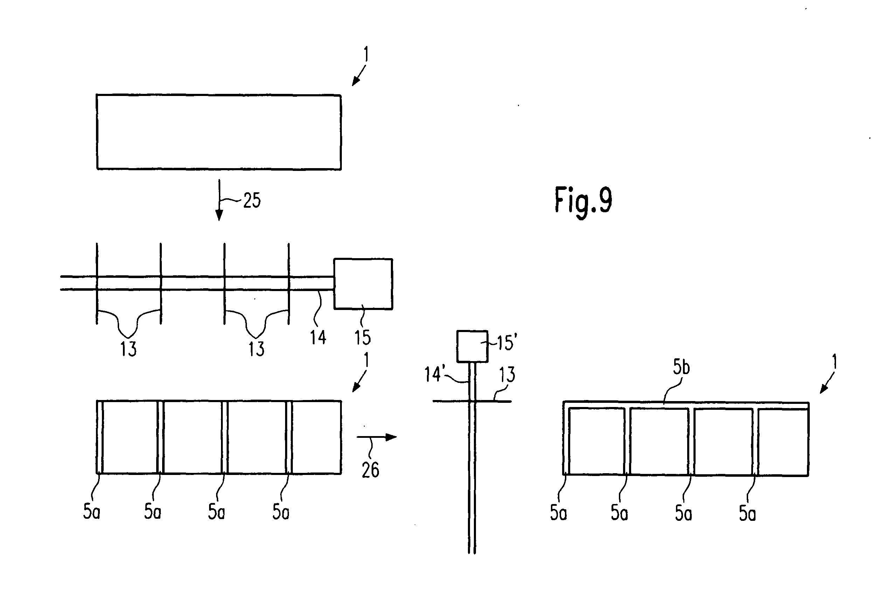

Fig. 9 shows a preferred embodiment of the machine. In the machine two circular saws are provided in order to fabricate panels which have the decorative layer removed in strips which are orthogonal to each other.

The machine comprises an axis 14 which has four circular saw blades 13 provided thereon and which is powered by a motor 15. A panel 1 with the decorative layer 4 on top which has not yet been removed, is moved in direction 25. Then when passing the circular saw blades 13 the decorative layer 4 is removed on the lower side of the panel 1 in parallel to the short edge of the panel 1. Since four blades 13 are provided four areas 5a are produced where the decorative layer is removed. Instead of four blades also one, two, three, five or more blades may be provided

In a direction perpendicular to the axis 14 another circular saw with an axis 14', a blade 13' and a motor 15' is provided. The blade 13' is provided perpendicular to the blades 13. The axis 14' and the blade 13' however may also be provided at different angles than 90° with respect to the axis 14 and the blades 13 in the case that other optical effects are desired.

When the panel 1 is moved along the direction 26 the blade 13' provides for the area 5b along the long edge of the panel 1 when the decorative layer 4 is removed.

A preferred embodiment of the method for fabrication is described in the following.

First, a sandwich comprising a decorative layer, a support layer and a carrier is provided. Such a sandwich may have an extension of several meters x several meters. This allows for the fabrication of more than one panel from a sandwich prepared as such.

In the next step the decorative layer is partially removed such that the support layer becomes visible. When removing the decorative layer the support layer may also be partially removed.

In the case that the sandwich is larger than a single panel, the sandwich may be cut into single panels before or after removing the decorative layer.

The decorative layer is preferably removed by a saw, and in particular by a circular saw, since it allows for a very accurate and reproducible removal of the decorative layer. Here it has to be kept in mind that the support layer is of a thickness of about 0.4 mm and therefore the depth of the cut has to be performed with high accuracy.

In another step before or after removal of the decorative layer, the side edges (long and short edges) can be provided with connecting portions.

The panels described herein are in particular for flooring. They may be, however, also be useful, adapted or intended for decorating walls, doors or ceilings or the like.

## Claims

1. Panel (1), preferably floor panel, comprising:
a decorative layer (4) with a decorative pattern,
a support layer (3) for supporting the decorative layer, and
a carrier (2) for supporting the support layer (3) wherein the support layer (3) is arranged at least partially between the decorative layer (4) and the carrier (2),
whereby the decorative layer (4) is at least partially absent, preferably removed, such that the support layer (3) is visible and whereby the support layer being a layer comprising kraft paper.

2. Panel of claim 1, **characterized by** the decorative layer (4) being absent at least in an area (5a,5b) located at an edge of the panel (1).

3. Panel of any of claims 1 or 2, **characterized by** the decorative layer (4) being absent in an area (5a,5b) located at one edge of the panel (1) but not at the opposite edge.

4. Panel of any of claims 1 to 3, **characterized by** the decorative layer (4) being at least absent in an area (5a,5b) of the panel (1) which is not located at the edge of the panel (1).

5. Panel of any of claims 1 to 4, **characterized by** the decorative layer (4) being absent in an area (5a,5b) which is a strip.

6. Panel of any of claims 1 to 5, **characterized in that** in the support layer (3) is partially absent, preferably removed, where the decorative layer (4) is absent.

7. Panel of any of claims 1 to 6, **characterized by** the panel (1) comprising an abrasive overlay (8) over the decorative layer (4).

8. Panel of claim 7, **characterized in that** the abrasive overlay (8) is absent where the decorative layer (4) is absent.

9. Panel of any of claims 1 to 8, **characterized by** the decorative layer (4) being a printed paper.

10. Panel of any of claims 1 to 9, **characterized by** the support layer (3) being a layer comprising kraft paper, which is coloured or dyed.

11. Panel of any of claims 1 to 10, **characterized by** the carrier (2) comprising HDF, MDF, plastic, wood or the like.

12. Panel of any of claims 1 to 11, **characterized by** the cross section of the area (5a,5b) where the decorative layer (4) is absent being rectangular.

13. Panel of any of claims 1 to 12, **characterized by** connecting portions (6,7) at the edges of the panel (1) for connecting the panels (1) by snapping, tilting, klicking or the like with or without play.

14. Method of fabricating a panel, preferably a floor panel (1), comprising the step of preparing a sandwich of:
a decorative layer (4) with a decorative pattern,
a support layer (3) comprising kraft paper for supporting the decorative layer,
a carrier (2) for supporting the support layer (3) wherein the support layer (3) is arranged between the decorative layer (4) and the carrier (2), and
the step of removing partially the decorative layer (4) such that the support layer (3) becomes visible or by not providing the decorative layer in some area.

15. Method of claim 14, **characterized in that** in the step of removing the decorative layer (4) the support layer is also partially removed.

16. Method of any of claims 14 or 15, **characterized in that** the sandwich is cut into single panels (1) before or after the step of removing the decorative layer (4).

17. Method of any of claims 15 to 16, **characterized in that** the decorative layer (4) is removed by a saw (13), preferably a circular saw.

18. Method of any of claims 14 to 17, **characterized in that** the decorative layer (4) is removed in an area (5a,5b) of the shape of a stripe or preferably a plurality of stripes, where some of those stripes are preferably in an perpendicular orientation to each other.

19. Machine for fabricating panels, preferably floor panels, comprising:
a support surface (17) for supporting panels (1),
a saw, preferably a circular saw (13), which extends beyond the support surface by an amount of not more than 1.0 mm, preferably 0.5 mm, and
a counter pressure mechanism for providing a counter pressure opposite of the circular saw.

## Patentansprüche

1. Platte (1), vorzugsweise Bodenplatte, die umfasst:
eine Zierschicht (4) mit einem Ziermuster,
eine Trageschicht (3) zum Tragen der Zierschicht, und
einen Träger (2) zum Tragen der Trageschicht (3), wobei die Trageschicht (3) wenigstens teilweise zwischen der Zierschicht (4) und dem Träger (2) angeordnet ist,
wobei die Zierschicht (4) wenigstens teilweise nicht vorhanden, vorzugsweise entfernt, ist, so dass die Trageschicht (3) sichtbar ist, und wobei die Trageschicht eine Schicht ist, die Kraftpapier umfasst.

2. Platte nach Anspruch 1, **dadurch gekennzeichnet, dass** die Zierschicht (4) in wenigstens einem Bereich (5a, 5b) nicht vorhanden ist, der sich an einem Rand der Platte (1) befindet.

3. Platte nach einem der Ansprüche 1 oder 2, **dadurch gekennzeichnet, dass** die Zierschicht (4) in einem Bereich (5a, 5b) nicht vorhanden ist, der sich an einem Rand der Platte (1) befindet, jedoch nicht an dem gegenüberliegenden Rand.

4. Platte nach einem der Ansprüche 1 bis 3, **dadurch gekennzeichnet, dass** die Zierschicht (4) wenigstens in einem Bereich (5a, 5b) der Platte (1) nicht vorhanden ist, der sich nicht an dem Rand der Platte (1) befindet.

5. Platte nach einem der Ansprüche 1 bis 4, **dadurch gekennzeichnet, dass** die Zierschicht (4) in einem Bereich (5a, 5b) nicht vorhanden ist, der ein Streifen ist.

6. Platte nach einem der Ansprüche 1 bis 5, **dadurch gekennzeichnet, dass** die Trageschicht (3) dort teilweise nicht vorhanden, vorzugsweise entfernt, ist, wo die Zierschicht (4) nicht vorhanden ist.

7. Platte nach einem der Ansprüche 1 bis 6, **dadurch gekennzeichnet, dass** die Platte (1) eine abtragende Beschichtung (8) über der Zierschicht (4) umfasst.

8. Platte nach Anspruch 7, **dadurch gekennzeichnet, dass** der abtragende Überzug (8) dort nicht vorhanden ist, wo die Zierschicht (4) nicht vorhanden ist.

9. Platte nach einem der Ansprüche 1 bis 8, **dadurch gekennzeichnet, dass** die Zierschicht (4) ein bedrucktes Papier ist.

10. Platte nach einem der Ansprüche 1 bis 9, **dadurch gekennzeichnet, dass** die Trageschicht (3) eine Schicht ist, die Kraftpapier umfasst, das farbig oder gefärbt ist.

11. Platte nach einem der Ansprüche 1 bis 10, **dadurch gekennzeichnet, dass** der Träger (2) HDF, MDF, Kunststoff, Holz oder dergleichen umfasst.

12. Platte nach einem der Ansprüche 1 bis 11, **dadurch gekennzeichnet, dass** der Querschnitt des Bereiches (5a, 5b), in dem die Zierschicht (4) nicht vorhanden ist, rechteckig ist.

13. Platte nach einem der Ansprüche 1 bis 12 **gekennzeichnet durch** Verbindungsabschnitte (6, 7) an den Rändern der Platte (1) zum Verbinden der Platten (1) **durch** Einrasten, Neigen, Einschnappen oder dergleichen mit oder ohne Spiel.

14. Verfahren zum Herstellen einer Platte, vorzugsweise einer Bodenplatte (1), das den Schritt des Fertigens eines Schichtelementes umfasst, das besteht aus:
einer Zierschicht (4) mit einem Ziermuster,
einer Trageschicht (3) zum Tragen der Zierschicht, und
einem Träger (2) zum Tragen der Trageschicht (3), wobei die Trageschicht (3) wenigstens teilweise zwischen der Zierschicht (4) und dem Träger (2) angeordnet ist, und
den Schritt des teilweisen Entfernens der Zierschicht (4), so dass die Trageschicht (3) sichtbar wird, oder des Unterlassens der Bereitstellung der Zierschicht in einem Bereich.

15. Verfahren nach Anspruch 14, **dadurch gekennzeichnet, dass** beim Schritt des Entfernens der Zierschicht (4) auch die Trageschicht teilweise entfernt wird.

16. Verfahren nach einem der Ansprüche 14 oder 15, **dadurch gekennzeichnet, dass** das Schichtelement vor oder nach dem Schritt des Entfernens der Zierschicht (4) in einzelne Platten (1) geschnitten wird.

17. Verfahren nach einem der Ansprüche 15 bis 15, **dadurch gekennzeichnet, dass** die Zierschicht (4) mittels einer Säge (13), vorzugsweise einer Kreissäge, entfernt wird.

18. Verfahren nach einem der Ansprüche 14 bis 17, **dadurch gekennzeichnet, dass** die Zierschicht (4) in einem Bereich (5a, 5b) in der Form eines Streifens oder vorzugsweise einer Vielzahl von Streifen dort entfernt wird, wo einige dieser Streifen vorzugsweise senkrecht zueinander ausgerichtet sind.

19. Maschine zum Herstellen von Platten, vorzugsweise Bodenplatten, die umfasst:
eine Tragefläche (17) zum Tragen von Platten (1),
eine Säge, vorzugsweise eine Kreissäge (13), die sich um ein Maß von nicht mehr als 1,0 mm, vorzugsweise 0,5 mm, über die Tragefläche hinaus erstreckt, und
einen Gegendruckmechanismus zum Erzeugen eines der Kreissäge entgegengesetzten Gegendrucks.

## Revendications

1. Panneau (1), de préférence panneau de plancher, comprenant :
une couche décorative (4) avec un motif décoratif,
une couche de support (3) pour supporter la couche décorative, et
un support (2) pour supporter la couche de support (3) dans lequel la couche de support (3) est agencée au moins partiellement entre la couche décorative (4) et le support (2),
dans lequel la couche décorative (4) est au moins partiellement absente, de préférence enlevée, de sorte que la couche de support (3) soit visible et dans lequel la couche de support est une couche comprenant du papier kraft.

2. Panneau selon la revendication 1, **caractérisé en ce que** la couche décorative (4) est absente au moins dans une zone (5a, 5b) située au niveau d'un bord du panneau (1).

3. Panneau selon l'une quelconque des revendications 1 ou 2, **caractérisé en ce que** la couche décorative (4) est absente dans une zone (5a, 5b) située au niveau d'un bord du panneau (1) mais pas au niveau du bord opposé.

4. Panneau selon l'une quelconque des revendications 1 à 3, **caractérisé en ce que** la couche décorative (4) est au moins absente dans une zone (5a, 5b) du panneau (1) qui n'est pas située au niveau du bord du panneau (1).

5. Panneau selon l'une quelconque des revendications 1 à 4, **caractérisé en ce que** la couche décorative (4) est absente dans une zone (5a, 5b) qui est une bande.

6. Panneau selon l'une quelconque des revendications 1 à 5, **caractérisé en ce que** la couche de support (3) est partiellement absente, de préférence enlevée, là où la couche décorative (4) est absente.

7. Panneau selon l'une quelconque des revendications 1 à 6, **caractérisé en ce que** le panneau (1) comprend un revêtement abrasif (8) sur la couche décorative (4).

8. Panneau selon la revendication 7, **caractérisé en ce que** le revêtement abrasif (8) est absent là où la couche décorative (4) est absente.

9. Panneau selon l'une quelconque des revendications 1 à 8, **caractérisé en ce que** la couche décorative (4) est un papier imprimé.

10. Panneau selon l'une quelconque des revendications 1 à 9, **caractérisé en ce que** la couche de support (3) est une couche comprenant du papier kraft qui est coloré ou teinté.

11. Panneau selon l'une quelconque des revendications 1 à 10, **caractérisé en ce que** le support (2) comprend du HDF, du MDF, du plastique, du bois ou analogue.

12. Panneau selon l'une quelconque des revendications 1 à 11, **caractérisé en ce que** la section transversale de la zone (5a, 5b), où la couche décorative (4) est absente, est rectangulaire.

13. Panneau selon l'une quelconque des revendications 1 à 12, **caractérisé par** des parties de connexion (6, 7) au niveau des bords du panneau (1) pour relier les panneaux (1) par connexion rapide, basculement, encliquetage ou analogue avec ou sans jeu.

14. Procédé de fabrication d'un panneau, de préférence un panneau de plancher (1), comprenant l'étape consistant à préparer un sandwich composé :
d'une couche décorative (4) avec un motif décoratif,
d'une couche de support (3) comprenant du papier kraft pour supporter la couche décorative,
d'un support (2) pour supporter la couche de support (3), dans lequel la couche de support (3) est agencée entre la couche décorative (4) et le support (2), et
l'étape consistant à enlever partiellement la couche décorative (4) de sorte que la couche de support (3) devient visible ou consistant à ne pas prévoir la couche décorative dans une certaine zone.

15. Procédé selon la revendication 14, **caractérisé en ce que** dans l'étape d'enlèvement de la couche décorative (4), la couche de support est également partiellement enlevée.

16. Procédé selon l'une quelconque des revendications 14 ou 15, **caractérisé en ce que** le sandwich est coupé en panneaux individuels (1) avant ou après l'étape d'enlèvement de la couche décorative (4).

17. Procédé selon l'une quelconque des revendications 15 à 16, **caractérisé en ce que** la couche décorative (4) est enlevée par une scie (13), de préférence une scie circulaire.

18. Procédé selon l'une quelconque des revendications 14 à 17, **caractérisé en ce que** la couche décorative (4) est enlevée dans une zone (5a, 5b) de la forme d'une bande ou de préférence de plusieurs bandes, où certaines de ces bandes ont de préférence une orientation perpendiculaire les unes par rapport aux autres.

19. Machine pour fabriquer des panneaux, de préférence des panneaux de plancher, comprenant :
une surface de support (17) pour supporter les panneaux (1),
une scie, de préférence une scie circulaire (13), qui s'étend au-delà de la surface de support sur une quantité non supérieure à 1,0 mm, de préférence 0,5 mm, et
un mécanisme de pression inverse pour fournir une pression inverse opposée à la scie circulaire.
